# EUROPÄISCHE PATENTSCHRIFT

(11) **EP 3 068 605 B1**
(45) Veröffentlichungstag und Bekanntmachung des Hinweises auf die Patenterteilung: **28.02.2018**
(21) Anmeldenummer: 14793866.6
(22) Anmeldetag: 07.11.2014
(51) Int. Cl.: B29C 67/00, B22F 3/105

(54) **VORRICHTUNG ZUM SCHICHTWEISEN HERSTELLEN EINES DREIDIMENSIONALEN OBJEKTS**
DEVICE FOR PRODUCING A THREE-DIMENSIONAL OBJECT IN LAYERS
DISPOSITIF DE FABRICATION PAR COUCHES D'UN OBJET TRIDIMENSIONNEL

(30) Priorität: 15.11.2013 DE 102013223411
(43) Veröffentlichungstag der Anmeldung: 21.09.2016
(73) Patentinhaber: EOS GmbH Electro Optical Systems, 82152 Krailling (DE)
(72) Erfinder: HEUGEL, Martin, 86899 Landsberg am Lech (DE); FEY, Georg, 80336 München (DE)
(74) Vertreter: Prüfer & Partner mbB Patentanwälte · Rechtsanwälte
(86) Internationale Anmeldenummer: PCT/EP2014/074015
(87) Internationale Veröffentlichungsnummer: WO 2015/071183

(56) Entgegenhaltungen:
- EP-A1- 2 289 652
- WO-A1-2010/026397
- WO-A1-2014/165735
- WO-A2-2008/128502
- DE-A1-102004 057 866
- DE-A1-102009 036 153

## Beschreibung

Die vorliegende Erfindung bezieht sich auf eine Vorrichtung zum schichtweisen Herstellen eines dreidimensionalen Objekts durch schichtweises Verfestigen von Aufbaumaterial an den dem Querschnitt des herzustellenden Objektes in der jeweiligen Schicht entsprechenden Stellen.

Ein Verfahren zum schichtweisen Herstellen eines dreidimensionalen Objekts, das unter dem Namen "Selektives Lasersintern" bekannt ist, sowie eine zugehörige Vorrichtung zur Durchführung des Verfahrens sind beispielsweise in der DE 10 2005 024 790 A1 beschrieben.

Aus DE 10 2004 057 866 B4 ist eine Vorrichtung zum schichtweisen Herstellen eines dreidimensionalen Objekts bekannt, deren Gehäuse in mindestens zwei Gehäuseabschnitte aufgeteilt ist. In einem ersten Gehäuseabschnitt findet der eigentliche Bauprozess statt. Ein zweiter Gehäuseabschnitt dient als Entnahmestation für das fertiggestellte Objekt.

In US 6,383,446 B1 ist ein System zum elektrischen Sintern beschrieben, dass aus mehreren Arbeitsstationen gebildet ist. In einer Ausführungsform sind eine Vorwärmeinheit, eine Sintereinheit und eine Abkühleinheit nebeneinander angeordnet und miteinander verbunden. Die Einheiten sind durch verschließbare Schieber voneinander und von der äußeren Umgebung isolierbar.

WO 2010/026397 A1 beschreibt eine additive Herstellungsvorrichtung, die ein optisches Modul zum Erzeugen, Fokussieren und Lenken eines Laserstrahls und eine Behandlungskammer mit einem Fenster zum Durchlassen des Laserstrahls enthält. Das optische Modul ist abnehmbar an der Verarbeitungskammer Anbringbar, um den Laserstrahl durch das Fenster zu liefern.

DE 10 2009 036 153 A1 beschreibt eine Vorrichtung zur generativen Herstellung dreidimensionaler Formteile aus pulverartigem Baumaterial unter Einbringung von Strahlungsenergie, insbesondere eine Lasersinter- und/oder Laserschmelzvorrichtung, mit einem Bauraum, in den ein Wechselbehälter einbringbar ist, in dem eine höhenverlagerbare Bauplattform angeordnet ist, die mit dem zur Verfestigung mittels Strahlungsenergie vorgesehenen pulverartigem Baumaterial beschichtbar ist, wobei die Vorrichtung nach Art eines beidseitig offenen Portals ausgebildet ist und dazu ein Portal-Querelement und wenigstens zwei im Wesentlichen säulenartige, mit dem Portal-Querelement verbundene Trägerelemente aufweist und der Bauraum unterhalb des Querelementes und zwischen den Trägerelementen angeordnet ist, wobei der Wechselbehälter von entweder beiden offenen Portalseiten zuführbar und/oder entnehmbar ist oder durch das Portal hindurchführbar ist.

EP 2 289 652 A1 beschreibt Verfahren zum Herstellen von Produkten mit individueller Geometrie, insbesondere Zahnersatz oder dentalen Hilfsteilen, mit den Schritten Herstellen mehrerer Produkte auf der Oberfläche einer Substratplatte mittels selektiven Aushärtens, insbesondere mittels selektiven Sinterns oder Schmelzens, bei dem das Material in aufeinanderfolgenden Schichten aufgetragen wird, nach jedem Schichtauftrag ein oder mehrere vorbestimmte Bereiche der aufgetragenen Schicht mittels einer energiereichen Strahlung selektiv ausgehärtet und mit einem oder mehreren Bereichen der darunter liegenden Schicht verbunden werden, wobei die vorbestimmten Bereiche anhand einer Querschnittsgeometrie des Produkts in der jeweiligen Schicht vorbestimmt werden. Erfindungsgemäß ist vorgesehen, dass eine Substratplatte bereitgestellt wird, welche in ein erstes Substratplattensegment und zumindest ein weiteres Substratplattensegment unterteilt ist, die lösbar miteinander oder mit einem Grundträger verbunden sind, ein erstes Produkt auf dem ersten Substratplattensegment hergestellt wird durch aufeinanderfolgendes Auftragen von Materialschichten auf das erste Substratplattensegment und selektives Aushärten von vorbestimmten Bereichen jeder aufgetragenen Materialschicht nach deren Auftrag, und zumindest ein weiteres Produkt auf dem zumindest einen weiteren Substratplattensegment hergestellt wird durch aufeinanderfolgendes Auftragen von Materialschichten auf das weitere Substratplattensegment und selektives Aushärten von vorbestimmten Bereichen jeder aufgetragenen Materialschicht nach deren Auftrag.

Je nach verwendetem Material und den daraus resultierenden Betriebsbedingungen (z.B. Bautemperatur, Gasreinheit usw.) und der Anzahl der in einer Produktionsstätte verwendeten Vorrichtung zum schichtweisen Herstellen eines dreidimensionalen Objekts besteht ein Bedarf daran, die Konfiguration der vorhandenen Vorrichtungen möglichst flexibel an die geforderten Bedingungen anpassen zu können.

Die Aufgabe der vorliegenden Erfindung besteht darin, eine Vorrichtung zum schichtweisen Herstellen eines dreidimensionalen Objekts bereitzustellen, die eine flexible Anpassung an verschiedene Bedingungen ermöglicht.

Die Aufgabe wird gelöst durch eine Vorrichtung gemäß Anspruch 1 oder 3. Weiterbildungen der Erfindung sind jeweils in den Unteransprüchen angegeben.

Dadurch, dass das erste bis dritte Modul so ausgebildet sind, dass wahlweise und austauschbar das zweite oder das dritte Modul oder beide so mit dem ersten Modul verbindbar sind, dass ihre Gehäuse direkt aneinander gekoppelt sind ist es möglich, einzelne Arbeitsstationen flexibel in verschiedener Anordnung zu kombinieren und einfach gegeneinander auszutauschen.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum schichtweisen Herstellen eines dreidimensionalen Objekts gemäß einer ersten Ausführungsform der vorliegenden Erfindung.
- Fig. 2: ist eine ist eine schematische Ansicht verschiedener Anordnungen von Arbeitsstationen gemäß der ersten Ausführungsform.
- Fig. 3: ist eine schematische Ansicht eines modularen Aufbaus einer Arbeitsstation gemäß einer zweiten Ausführungsform der vorliegenden Erfindung.

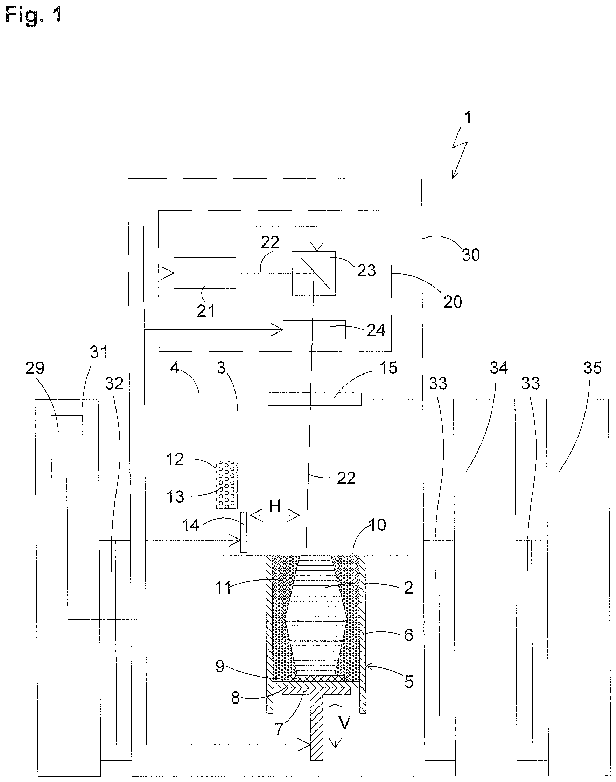

Im Folgenden wird mit Bezug auf Fig. 1 ein Ausführungsbeispiel einer Vorrichtung gemäß einer ersten Ausführungsform der vorliegenden Erfindung beschrieben. Die in Fig. 1 dargestellte Vorrichtung ist eine Lasersinter- oder Laserschmelzvorrichtung 1. Zum Aufbauen des Objekts 2 enthält sie eine Prozesskammer 3 mit einer Kammerwandung 4.

In der Prozesskammer 3 ist ein nach oben offener Behälter 5 mit einer Wandung 6 angeordnet. Er ist als Wechselbehälter ausgebildet, was bedeutet, dass er der Prozesskammer 3 entnommen und wieder in sie eingesetzt werden kann. In dem Behälter 5 ist ein in einer vertikalen Richtung V bewegbarer Träger 7 angeordnet, an dem eine Grundplatte 8 angebracht ist, die den Wechselbehälter nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient.

In Fig. 1 ist das in dem Behälter 5 auf der Bauplattform 9 zu bildende Objekt 2 unterhalb einer Arbeitsebene 10 in einem Zwischenzustand dargestellt mit mehreren verfestigten Schichten, umgeben von unverfestigt gebliebenem Aufbaumaterial 11. Weiter sind in der Prozesskammer 3 ein Vorratsbehälter 12 für ein durch elektromagnetische Strahlung verfestigbares pulverförmiges Aufbaumaterial 13 und ein in einer horizontalen Richtung H bewegbarer Beschichter 14 zum Aufbringen des Aufbaumaterials 13 auf die Arbeitsebene 10 angeordnet. An ihrer Oberseite enthält die Wandung 4 der Prozesskammer 3 ein Einkoppelfenster 15 für die zum Verfestigen des Pulvers dienende Strahlung.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über das Einkoppelfenster 15 auf die Arbeitsebene 10 fokussiert wird.

Weiter enthält die Lasersintervorrichtung 1 eine Steuereinheit 29, über die die einzelnen Bestandteile der Vorrichtung in koordinierter Weise zum Durchführen des Bauprozesses gesteuert werden. Die Steuereinheit kann eine CPU enthalten, deren Betrieb durch ein Computerprogramm (Software) gesteuert wird.

Gemäß der vorliegenden Erfindung ist die Lasersintervorrichtung 1 als flexibles modulares System aufgebaut, das aus einzelnen Modulen zusammengesetzt ist. Dabei sind die Hauptfunktionen des Herstellungsverfahrens auf verschiedene Arbeitsstationen aufgeteilt, die flexibel in beliebiger Kombination miteinander verbunden und gegeneinander ausgetauscht werden können. Herstellung bezieht sich hierbei nicht nur auf den eigentlichen Aufbau des Objekts aus dem Pulver, sondern kann auch alle zur Vorbereitung des Aufbaus und zum Nachbearbeiten des Objekts dienenden Schritte mit einbeziehen.

Die Prozesskammer 3 mit den in ihr erhaltenen Komponenten und die Belichtungseinheit 20 bilden zusammen eine Fertigungsstation 30, die ein erstes Modul des modularen Systems bildet.

Die Steuereinheit 19 kann in einem von der Fertigungsstation 30 getrennt gebildetem Schaltschrank 31 untergebracht sein, der neben der Steuerung auch die Energieversorgung der Vorrichtung übernimmt. Der Schaltschrank 31 ist über eine Steuerschnittstelle 32 direkt an die Fertigungsstation 30 angekoppelt.

Weitere Module werden durch einzelne Arbeitsstationen gebildet, in denen andere Schritte des zur Herstellung des Objekts dienenden Verfahrens durchgeführt werden als der direkte Vorgang des Aufbauens des Objekts aus dem Pulver. Diese Arbeitsstationen sind jeweils über eine Modulschnittstelle 33 so miteinander und/oder mit der Fertigungsstation 30 verbunden, dass ihre Gehäuse direkt aneinander gekoppelt sind.

Fig. 1 zeigt als Beispiel zwei zusätzliche Arbeitsstationen, nämliche eine Auspackstation 34, die über eine Modulschnittstelle 33 mit der Fertigungsstation 30 verbunden ist, und eine Rüststation 35, die über eine Modulschnittstelle 33 mit der Rüststation 35 verbunden ist.

Damit die einzelnen Arbeitsstationen frei gegeneinander auswechselbar sind und in jeder Kombination miteinander verbunden werden können, müssen sie eine definierte Modulschnittstelle aufweisen, mit der die Gehäuse zweier benachbarter Stationen direkt aneinander gekoppelt werden können. Jede der Modulsschnittstellen 33 enthält zumindest eine Öffnung, durch die der Wechselbehälter 5 von einer Station in eine andere gebracht werden kann, eine Einrichtung zum direkten mechanischen Koppeln der Gehäuse der einzelnen Stationen aneinander, die z.B. als Verbindungsflansch mit beliebigen Befestigungsmitteln gebildet sein kann, eine Einrichtung zum elektrischen Verbinden der Stationen miteinander, z.B. elektrische Steuer- und Leistungsverbinder, und eventuell eine Einrichtung zum hydraulischen und/oder pneumatischen Verbinden der Stationen miteinander, z.B. hydraulische und/oder pneumatische Kupplungen. Die Steuerverbinder können dabei auch als Buskoppler ausgebildet sein.

Die Modulschnittstellen 33 müssen bei allen Stationen kompatibel zu einander sein, d.h. bei jeder Station müssen sowohl die mechanischen Abmessungen (z.B. Größe und Lage der Öffnung, Größe eines Verbindungsflanschs und Lage der Befestigungsmittel) als auch die elektrischen, hydraulischen und pneumatischen Verbindungen (Abmessungen und Lage der Steuer- und Leistungsverbinder sowie der hydraulischen und pneumatischen Kupplungen) kompatibel zueinander sein.

Die Modulschnittstelle 33 kann ein Element enthalten, mit der die Ausrichtung benachbarter Module z.B. eine relative Position zwischen ihnen in horizontaler und/oder vertikaler Richtung oder eine Winkelstellung zueinander festgelegt werden kann. Diese Ausrichtvorrichtung kann beispielsweise eine Kugelkopfzentrierung, Führungen, Anschläge und Ähnliches enthalten.

Die Modulschnittstelle 33 kann weiter auch ein Schott enthalten, mit dem sich die jeweilige Arbeitsstation gasdicht von einer anschließenden Station isolieren lässt. Dadurch können die Gasräume der einzelnen Stationen voneinander getrennt werden, so dass beispielsweise lediglich ein Teil der Stationen mit einem Schutzgas geflutet werden kann, während die anderen Stationen der Umgebungsluft ausgesetzt sind. Dadurch kann Schutzgas gespart werden. Es können auch in verschiedenen Stationen verschiedene Schutzgase eingesetzt werden. Sind zwischen zwei Stationen zwei Schotte vorhanden, kann die jeweilige Atmosphäre auch dann erhalten bleiben, wenn die beiden Stationen voneinander getrennt werden.

In den einzelnen Stationen ist eine in den Figuren nicht gezeigte Fördervorrichtung vorhanden, mittels derer der Wechselbehälter 5 durch die Öffnungen der Modulschnittstellen 33 hindurch von einer Station in eine angrenzende gefördert werden kann. Diese Fördereinrichtung kann beispielsweise durch drehbare Walzen, ein Förderband oder ähnliches verwirklicht sein. Bei einem schienenbasierten Fördersystem muss auch die Spurweite der einzelnen Stationen aneinander angepasst sein.

Im Betrieb der in Fig. 1 gezeigten Konfiguration wird zunächst in der Rüststation 35 ein leerer Wechselbehälter 5 vorbereitet. Danach wird dieser mittels der internen Fördervorrichtung zum Herstellen des Objekts 2 durch die Auspackstation 34 hindurch in die Prozesskammer 3 transportiert. Für jede Schicht wird zunächst der Träger 7 um die gewünschte Schichtdicke abgesenkt, und dann wird unter Verwendung des Beschichters 14 eine Schicht des pulverförmigen Aufbaumaterials 13 aufgetragen. Anschließend wird der Querschnitt des herzustellenden Objekts von dem Laserstrahl 22 abgetastet, so dass das pulverförmige Aufbaumaterial 13 an diesen Stellen verfestigt wird. Diese Schritte werden solange wiederholt, bis das Objekt fertiggestellt ist. Anschließend wird der Wechselbehälter 5 mittels der internen Fördervorrichtung in die Auspackstation 34 verbracht, in der das Objekt 2 von dem es umgebenden, unverfestigt gebliebenen Pulver 11 befreit wird. Anschließend wird der Wechselbehälter 5 aus der Auspackstation 34 in die Rüststation 35 verbracht, in der das Objekt 2 entnommen wird.

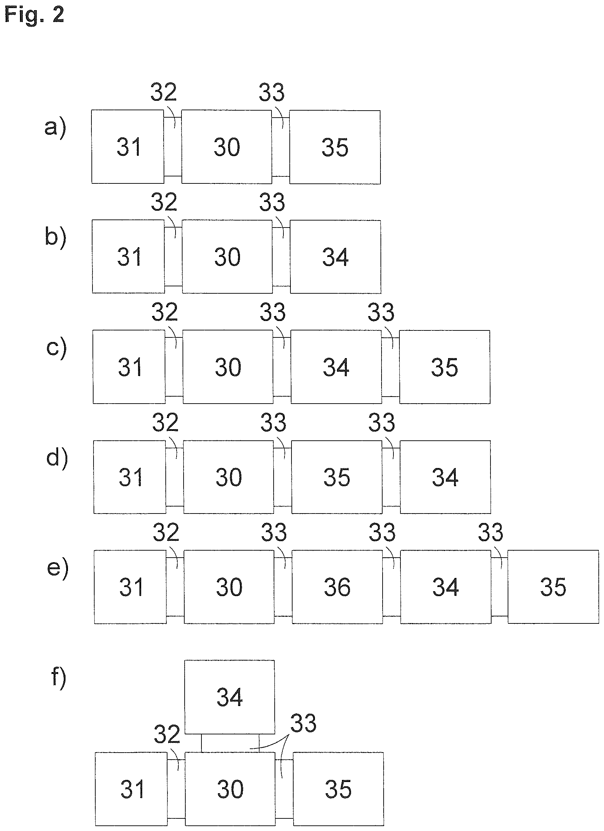

Fig. 2 ist eine schematische Ansicht verschiedener Anordnungen von Arbeitsstationen gemäß einer ersten Ausführungsform.

Fig. 2a) zeigt eine an die Fertigungsstation 30 angekoppelte Rüststation 35. Die in Fig. 1 gezeigte Auspackstation 34 ist hier weggelassen. Das Auspacken des Objekts aus dem unverfestigten Pulver geschieht bei dieser Konfiguration in der Fertigungsstation selber, in der Rüststation oder in einer externen Station.

Fig. 2b) zeigt eine an die Fertigungsstation 30 angekoppelte Auspackstation 34. Die in Fig. 1 gezeigte Rüststation 35 ist hier weggelassen. Der Rüstvorgang geschieht bei dieser Konfiguration in der Fertigungsstation selber.

Fig. 2c) und 2d) zeigen zwei Konfigurationen, bei denen sowohl eine Auspackstation 34 als auch eine Rüststation 35 vorgesehen sind. Dabei ist frei wählbar, welche der beiden Stationen direkt an die Fertigungsstation 30 angekoppelt ist und welche an die andere Station angekoppelt ist. Die Konfiguration von Fig. 2c) entspricht dabei dem in Fig. 1 gezeigten Aufbau, bei der Konfiguration von Fig. 2d) ist die Reihenfolge der Stationen vertauscht.

Fig. 2e) zeigt eine Konfiguration, bei der zusätzlich zu den in Fig. 2c) gezeigten Stationen eine Wechselstation 36 vorgesehen ist. Auch hier ist die Reihenfolge der Stationen frei wählbar.

Die Wechselstation 36 ist zum Auswechseln von Wechselbehältern 5 eingerichtet. So wird z.B. ein in der Rüststation 35 vorbereiteter Wechselbehälter 5 durch die Auspackstation 34 in die Wechselstation 36 verbracht, während in der Fertigungsstation 30 in einem weiteren Wechselbehälter ein Objekt hergestellt wird. Nach dem Ende des Aufbaus des Objekts wird der gefüllte Wechselbehälter aus der Fertigungsstation 30 in die Wechselstation 36 verbracht, und der leere Wechselbehälter wird aus der Wechselstation 36 in die Fertigungsstation 30 verbracht, so dass gleich mit dem Aufbau eines neuen Objekts begonnen werden kann. Dann wird der volle Wechselbehälter in die Auspackstation 34 verbracht, in der das Objekt ausgepackt wird.

Fig. 2e) zeigt eine Konfiguration, bei der die in Fig. 2c) gezeigten Stationen nicht hintereinander in einer Reihe angeordnet sind, sondern direkt an die Fertigungsstation 30 angekoppelt sind.

Auch beliebige Kombinationen der gezeigten Konfigurationen sind möglich, wobei eine beliebige Anzahl von Arbeitsstationen vorgesehen sein kann. Dabei können auch nicht nur an die Fertigungsstation 30 mehr als eine Arbeitsstation angekoppelt sein, sondern auch an jede der anderen Arbeitsstationen. So können z.B. bei der in Fig. 2e) gezeigten Konfiguration weitere Stationen an die Wechselstation 36 angekoppelt sein.

Die beschriebenen Arbeitsstationen sind nur als Beispiele gedacht und nicht einschränkend zu verstehen. Es können beliebige andere Stationen vorgesehen sein, z.B. eine Station zum Abkühlen des Objekts nach Entnahme aus der Fertigungsstation 30 und vor dem Transport in die Auspackstation 34, eine Station zum Nachbearbeiten des in der Auspackstation 34 ausgepackten Objekts usw.

Auch wenn in der ersten Ausführungsform Stationen beschrieben wurden, in denen verschiedene zum Herstellen des dreidimensionalen Objekts dienende Verfahrensschritte durchgeführt werden, ist die vorliegende Erfindung nicht darauf eingeschränkt. Es können z.B. auch Module vorhanden sein, die denselben Verfahrensschritt auf verschiedene Weise durchführen.

So können z.B. eine Fertigungsstation und zwei oder mehr verschiedene Auspackstationen bereitgestellt sein, in denen das Auspacken auf verschiedene Weise durchgeführt wird, z.B. in der einen durch Absaugen des unverfestigt gebliebenen Pulvers und in der anderen durch Abblasen. Wahlweise und austauschbar wird die eine oder die andere Auspackstation mit der Fertigungsstation verbunden.

Andererseits können aber auch zwei oder mehr verschiedene Fertigungsstationen bereitgestellt sein, z.B. eine für normalen Verfahrensablauf, eine mit einer Hochtemperaturprozesskammer mit zusätzlicher Heizung und eine mit erhöhtem Hub der Vertikalverschiebung des Trägers zum Herstellen größerer Objekte. Wahlweise und austauschbar wird eine beliebige dieser Fertigungsstationen z.B. mit einer Auspackstation verbunden.

Allgemein kann eine beliebige Anzahl von Modulen bereitgestellt sein, die dazu geeignet sind, zum Herstellen des dreidimensionalen Objekts dienende Verfahrensschritte durchzuführen.

Durch diesen modularen Aufbau der Lasersinteranlage, bei der verschiedene zum Herstellen des dreidimensionalen Objekts dienende Verfahrensschritte auf verschiedene Arbeitsstationen (Module) aufgeteilt sind, die sich aufgrund einer definierten Schnittstelle zwischen den Modulen beliebig miteinander kombinieren lassen, ist es möglich, die Lasersinteranlage flexibel an verschiedene Anforderungen bei der Herstellung dreidimensionaler Objekte anzupassen.

Dadurch, dass die Gehäuse der einzelnen Module direkt aneinander gekoppelt sind, kann der Wechselbehälter zwischen den einzelnen Stationen transportiert werden, ohne zwischendurch einer Umgebungsatmosphäre ausgesetzt zu sein.

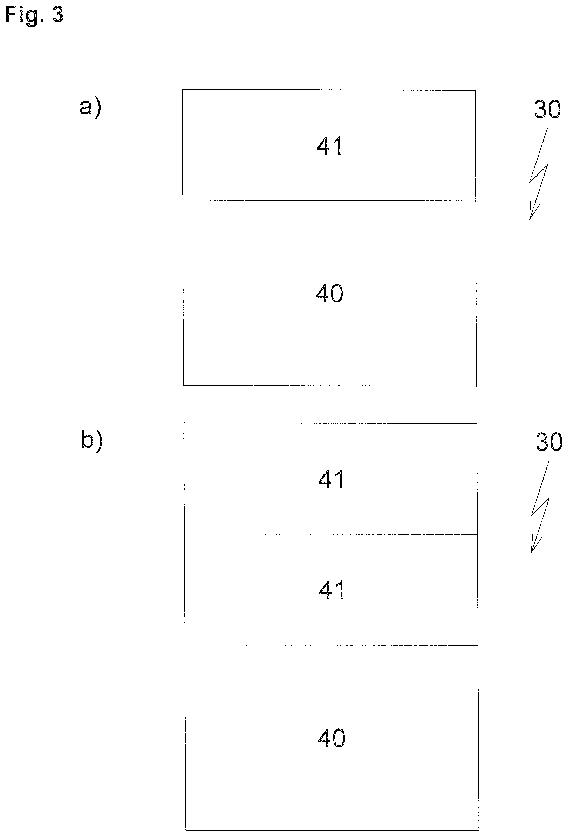

Aber nicht nur das gesamte System kann modular ausgebildet sein, sondern auch jede einzelne der Arbeitsstationen. Fig. 3 ist eine schematische Ansicht eines modularen Aufbaus einer Arbeitsstation gemäß einer zweiten Ausführungsform. Als Beispiel für eine modular aufgebaute Arbeitsstation ist in Fig. 3 die Fertigungsstation 30 dargestellt.

Wie in Fig. 3a) gezeigt, besteht die modular aufgebaute Fertigungsstation 30 aus einer Grundeinheit 40 und einem Aufsatzmodul 41, das auf die Grundeinheit 40 aufsetzbar gebildet ist.

Dabei kann die Schnittstelle zwischen der Grundeinheit 40 und dem Aufsatzmodul 41 an verschiedenen Stellen gebildet sein. So kann das Grundmodul beispielsweise die in Fig. 1 unterhalb der Arbeitsebene 10 liegenden Komponenten enthalten, also u.a. eine Vorrichtung zur Aufnahme des Wechselbehälters 5 und zum vertikalen Verschieben des Trägers 7. Das Aufsatzmodul enthält dann u.a. den Beschichter 14 und die Bestrahlungsvorrichtung 20 zum selektiven Bestrahlen einer von dem Beschichter 14 aufgebrachten Pulverschicht.

Die Grundeinheit 40 kann aber auch die gesamte Prozesskammer 3 mit den darin enthaltenen Komponenten enthalten, wie sie oben mit Bezug auf Fig. 1 beschrieben sind. Das auf die Prozesskammer 3 aufgesetzte Aufsatzmodul 41 enthält dann die Bestrahlungsvorrichtung 20.

Erfindungsgemäß sind mehrere voneinander verschiedene Aufsatzmodule 41 bereitgestellt, die frei wählbar gegeneinander austauschbar sind. Während ein Aufsatzmodul 41 die in Fig. 1 gezeigte Bestrahlungsvorrichtung 22 enthält, kann ein anderes Aufsatzmodul 41 beispielsweise eine Bestrahlungsvorrichtung enthalten, die zwei Laserstrahlen 22 erzeugen und unabhängig voneinander steuern kann (Zweikopfsystem). Ein weiteres Aufsatzmodul 41 kann beispielsweise eine Bestrahlungsvorrichtung enthalten, die vier Laserstrahlen 22 erzeigen und unabhängig voneinander steuern kann (Vierkopfsystem).Diese verschiedenen Aufsatzmodule 41 können schnell und flexibel gegeneinander ausgetauscht werden.

In dem ersten Beispiel, bei dem der Oberteil der Prozesskammer 3 Teil des Aufsatzmoduls 41 ist, sind in den einzelnen Aufsatzmodulen Einkoppelfenster 15 enthalten, die an die jeweilige Bestrahlungsvorrichtung 20 angepasst sind. In dem zweiten Beispiel, bei der die Grundeinheit die gesamte Prozesskammer 3 umfasst, enthält die Oberseite der Prozesskammer 3 überall dort, wo eine der oben genannten Bestrahlungsvorrichtungen einen Laserstrahl einkoppeln kann, ein eigenes Einkoppelfenster 15 oder ein einziges Einkoppelfenster 15, das groß genug ist, um für alle vorgesehenen Varianten von Bestrahlungsvorrichtungen 20 verwendet zu werden.

Um eine genaue Positionierung und Wiederholgenauigkeit der Lage zu erzielen, liegt das Aufsatzmodul 41 über eine Dreipunktauflage auf der als Grundeinheit 40 dienenden Prozesskammer 3 auf. Dabei ist es möglich, die Ausrichtung des Aufsatzmoduls 41 zu der Grundeinheit 40 präzise einzustellen, und dadurch insbesondere ein Verkippen der Module gegeneinander zu vermeiden. Eine einstellbare Ausrichtung des Aufsatzmoduls 41 zu der Grundeinheit kann jedoch durch ein anderes Ausrichtelement erzielt werden als durch eine Dreipunktauflage.

Dabei ist vorzugsweise eine Umhüllung vorgesehen, mittels derer die Verbindungsstelle zwischen der Grundeinheit 40 und dem Aufsatzmodul 41 gasdicht abgeschlossen werden kann. Eine solche Abdichtung ist insbesondere erforderlich, wenn die Schnittstelle zwischen der Grundeinheit und dem Aufsatzmodul innerhalb der Prozesskammer 3 liegt. Die Abdichtung kann beispielsweise mittels eines Dichtungsrings aus einem elastischen Material erfolgen, der durch das Gewicht des Aufsatzmoduls, das mit seinem Gehäuse auf ihm aufliegt, zusammengedrückt wird und somit den Übergang zwischen der Grundeinheit und dem Aufsatzmodul abdichtet.

Während oben Beispiele der zweiten Ausführungsform beschrieben wurden, bei denen verschiedene Aufsatzmodule 41 wahlweise und austauschbar auf ein Grundmodul aufsetzbar sind, erlaubt der modulare Aufbau aber auch das Verwenden verschiedener Grundmodule 40. So kann beispielsweise dasselbe Aufsatzmodul 41 wahlweise und austauschbar auf eines von verschiedenen Grundmodulen aufsetzbar sein, von denen beispielsweise wie bei der ersten Ausführungsform eine für einen Standardprozess eingerichtet ist, eine andere eine zusätzliche Heizung enthält für einen Hochtemperaturprozess und wieder eine andere einen erhöhte Hub der Vertikalverschiebung des Trägers aufweist zum Herstellen größerer Objekte.

Eine in dieser Weise modular aufgebaute Fertigungsstation 30 kann demnach flexibel an verschiedene Anforderungen an die Bestrahlungsvorrichtung angepasst werden.

Es kann aber nicht nur die Fertigungsstation 30 modular aufgebaut sein, auch alle anderen Stationen. Als weiteres Beispiel wird im Folgenden eine modular aufgebaute Auspackstation beschrieben.

Bei der Auspackstation enthält die Grundeinheit 40 eine Vorrichtung zur Aufnahme des Wechselbehälters 5 und zum Verschieben der Bauplattform 9 innerhalb des Wechselbehälters 5 nach oben. Zwei Aufsatzmodule 41 enthalten verschiedene Vorrichtungen zum Entfernen des unverfestigt gebliebenen Pulvers 11 von dem fertiggestellten Objekt 2, beispielsweise eine Absaugvorrichtung und eine Abblasvorrichtung. Sobald das von unverfestigtem Pulver 11 umgebene Objekt 5 durch das Verschieben der Bauplattform 9 über die Oberkante des Wechselbehälters 5 hinausragt, wird das überschüssige Pulver abgesaugt oder abgeblasen.

Aber auch eine Kombination der beiden dargestellten Beispiele ist möglich. So kann z.B. auf die als Grundeinheit 40 dienende Prozesskammer 3 wahlweise ein Aufsatzmodul 41, dass zum Bestrahlen der aufgebrachten Schicht geeignet ist, oder ein Aufsatzmodul 41, dass zum Entfernen des überschüssigen Pulvers geeignet ist, aufgesetzt werden.

Die zweite Ausführungsform kann allein verwirklicht oder auch mit der ersten Ausführungsform kombiniert sein, d.h. dass die modulare Vorrichtung, die aus einer Grundeinheit und einem Aufsatzmodul gebildet ist, sowohl eine komplette Lasersinteranlage in einem Gehäuse als auch eine oder mehrere beliebige der modularen Arbeitsstationen sein kann, in die die Lasersinteranlage der ersten Ausführungsform unterteilt ist.

Auch wenn in der oben beschriebenen Ausführungsform ein Wechselbehälter verwendet wird, ist die vorliegende Erfindung nicht darauf eingeschränkt. Sie lässt sich auch auf Fälle anwenden, bei denen kein Wechselbehälter vorhanden ist. In diesen Fällen wird lediglich die Bauplattform, auf der das Objekt aufgebaut ist, zwischen den Arbeitsstationen hin- und hertransportiert.

Die als dargestellten Arbeitsstationen 34 bis 36 und die beschriebenen Varianten des Aufsatzmoduls sind als Beispiele und nicht einschränkend zu verstehen. Es können beliebige Module verwendet werden, die zur Herstellung dreidimensionaler Objekte mittels schichtweisen Auftragens und selektiven Verfestigens eines pulverförmigen Aufbaumaterials dienende Funktionen verwirklichen.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials durch Einwirkung von Energie angewendet werden. Der Laser kann beispielsweise ein Gas- oder Festkörperlaser, eine Laserdiode oder ein Laserdioden-Array sein. Allgemein kann jede Belichtungseinrichtung verwendet werden, mit der Energie selektiv auf eine Pulverschicht aufgebracht werden kann. Anstelle eines Lasers können beispielsweise eine andere Lichtquelle, ein Elektronenstrahl oder jede andere Energie- bzw. Strahlenquelle, die geeignet ist, das pulverförmige Aufbaumaterial zu verfestigen, verwendet werden. Auch auf das selektive Maskensintern, bei dem anstelle eines verfahrbaren Laserstrahls eine Maske und eine ausgedehnte Lichtquelle verwendet werden, oder auf das Absorptions- bzw. Inhibitionssintern kann die Erfindung angewendet werden. Anstelle des Einbringens von Energie kann das selektive Verfestigen des aufgetragenen Pulvers beispielsweise auch durch Aufbringen eines Klebers erfolgen. Allgemein bezieht sich die Erfindung auf das Herstellen eines Objekts mittels schichtweisen Auftragens und selektiven Verfestigens eines pulverförmigen Aufbaumaterials unabhängig von der Art und Weise, in der das Pulver verfestigt wird, beispielsweise auch auf das 3D-Drucken oder Tintenstrahlverfahren.

Als Aufbaumaterial können verschiedene Arten von Pulver verwendet werden, insbesondere Metall- oder Kunststoffpulver oder gefüllte oder gemischte Pulver.

## Patentansprüche

1. Modulares System (1) zum Herstellen eines dreidimensionalen Objekts (2) durch schichtweises Aufbringen und selektives Verfestigen eines pulverförmigen Aufbaumaterials (13) mit
einem ersten Modul (30, 34-36) zum Durchführen eines ersten zum Herstellen des dreidimensionalen Objekts (2) dienenden Vorgangs und
zumindest einem zweiten und einem dritten Modul (30, 34-36) zum Durchführen je eines weiteren zum Herstellen des dreidimensionalen Objekts (2) dienenden Vorgangs,
wobei das erste bis dritte Modul (30, 34-36) so ausgebildet sind, dass wahlweise und austauschbar das zweite oder das dritte Modul oder beide so mit dem ersten Modul verbindbar sind, dass ihre Gehäuse direkt aneinander gekoppelt sind,
das erste Modul eine Fertigungsstation (30) zum schichtweisen Aufbringen und selektiven Verfestigen des pulverförmigen Aufbaumaterials (13) auf einer Bauplattform (8, 9) und/oder in einem Wechselbehälter (5) enthält,
eine Modulschnittstelle (33) zwischen dem ersten Modul (30) und dem zweiten und/oder dritten Modul (34-36) und/oder eine Modulschnittstelle (33) zwischen dem zweiten und dritten Modul (34-36) eine Öffnung enthält, durch die die Bauplattform (8, 9) und/oder der Wechselbehälter (5) hindurchgeführt werden kann, und
das erste bis dritte Modul (30, 34-36) eine interne Fördereinrichtung enthält, die so ausgebildet ist, dass sie die Bauplattform (8, 9) und/oder den Wechselbehälter (5) zwischen dem ersten Modul (30) und dem zweiten oder dritten Modul (34-36) transportieren kann.

2. Modulares System (1) gemäß Anspruch 1, bei dem das zweite und/oder das dritte Modul enthält:
eine Rüststation (35) zum Vorbereiten einer Bauplattform (8, 9) oder eines Wechselbehälters (5), und/oder
eine Wechselstation (36) zum Auswechseln von Bauplattformen (8, 9) oder Wechselbehältern (35) und/oder
eine Auspackstation (34) zum Entfernen unverfestigt gebliebenen Pulvers (11) von dem fertiggestellten Objekt (2) und/oder
eine Station zum Nachbearbeiten des ausgepackten Objekts.

3. Modulares System (1) zum Herstellen eines dreidimensionalen Objekts (2) durch schichtweises Aufbringen und selektives Verfestigen eines pulverförmigen Aufbaumaterials (13) mit
einem ersten Modul (30, 34-36) zum Durchführen eines ersten zum Herstellen des dreidimensionalen Objekts (2) dienenden Vorgangs und
zumindest einem zweiten und einem dritten Modul (30, 34-36) zum Durchführen je eines weiteren zum Herstellen des dreidimensionalen Objekts (2) dienenden Vorgangs,
wobei das erste bis dritte Modul (30, 34-36) so ausgebildet sind, dass wahlweise und austauschbar das zweite oder das dritte Modul oder beide so mit dem ersten Modul verbindbar sind, dass ihre Gehäuse direkt aneinander gekoppelt sind,
das zweite und das dritte Modul je eine Fertigungsstation (30) zum schichtweisen Aufbringen und selektiven Verfestigen des pulverförmigen Aufbaumaterials (13) auf einer Bauplattform (8, 9) und/oder in einem Wechselbehälter (5) enthalten,
eine Modulschnittstelle (33) zwischen dem ersten Modul (34-36) und dem zweiten oder dritten Modul (30) eine Öffnung enthält, durch die die Bauplattform (8, 9) und/oder der Wechselbehälter (5) hindurchgeführt werden kann, und
das erste bis dritte Modul (30, 34-36) eine interne Fördereinrichtung enthält, die so ausgebildet ist, dass sie die Bauplattform (8, 9) und/oder den Wechselbehälter (5) zwischen dem ersten Modul (34-36) und dem zweiten oder dritten Modul (30) transportieren kann.

4. Modulares System (1) gemäß Anspruch 3, bei dem das erste Modul enthält:
eine Rüststation (35) zum Vorbereiten einer Bauplattform (8, 9) oder eines Wechselbehälters (5), und/oder
eine Wechselstation (36) zum Auswechseln von Bauplattformen (8, 9) oder Wechselbehältern (35) und/oder
eine Auspackstation (34) zum Entfernen unverfestigt gebliebenen Pulvers (11) von dem fertiggestellten Objekt (2) und/oder
eine Station zum Nachbearbeiten des ausgepackten Objekts.

5. Modulares System (1) gemäß einem der Ansprüche 1 bis 4, bei dem
die Modulschnittstelle (33) zwischen zwei aneinandergrenzenden Modulen (30, 34-36) ein Schott enthält, mit dem die Gasräume der zwei aneinandergrenzenden Module (30, 34-36) voneinander trennbar sind.

6. Modulares System (1) gemäß Anspruch 5, bei dem
die Modulschnittstelle (33) zwischen zwei aneinandergrenzenden Modulen (30, 34-36) zwei Schotte enthält, mit denen die Gasräume der aneinandergrenzenden Module (30, 34-36) auch dann abgedichtet bleiben, wenn Module (30, 34-36) voneinander getrennt sind.

7. Modulares System (1) gemäß einem der Ansprüche 1 bis 6, das weiter ein Ausrichtelement enthält zum Ausrichten zweier aneinandergrenzender Module (30, 34-36) zueinander.

8. Modulares System (1) gemäß einem der Ansprüche 1 bis 7, bei dem neben dem zweiten und dritten Modul (34-36) weitere Module (34-36) bereitgestellt sind, die wahlweise anstelle des zweiten oder dritten Moduls oder zusätzlich zu diesen flexibel wählbar an ein beliebiges Modul des Systems ankoppelbar sind.

## Claims

1. Modular system (1) for manufacturing a three-dimensional object (2) by applying and selectively solidifying a pulverulent building material (13) layer by layer, comprising
a first module (30, 34-36) for carrying out a first process serving for manufacturing the three-dimensional object (2), and
at least a second and a third module (30, 34-36), for each carrying out a further process serving for manufacturing the three-dimensional object (2),
wherein the first to third modules (30, 34-36) are configured so that the second or the third module, or both, can selectively and replaceably be connected to the first module in a way that their housings are coupled to one another directly,
the first module comprises a manufacturing station (30) for applying and selectively solidifying the pulverulent building material (13) layer by layer on a building platform (8, 9) and/or in a replaceable container (5),
a module interface (33) between the first module (30) and the second and/or third module (34-36) and/or a module interface (33) between the second and third modules (34-36) comprises an opening through which the production platform (8, 9) and/or the replaceable container (5) can be passed, and
the first to third modules (30, 34-36) comprise an internal conveyor device, which is configured in a way that it can transport the building platform (8, 9) and/or the replaceable container (5) between the first module (30) and the second or third module (34-36).

2. Modular system (1) according to claim 1, wherein the second and/or the third module comprises:
a setup station (35) for preparing a building platform (8, 9) or a replaceable container (5), and/or
an exchanging station (36) for exchanging building platforms (8, 9) or replaceable containers (35) and/or
an unpacking station (34) for removing powder (11) that has remained unsolidified from the completed object (2) and/or
a station for finishing the unpacked object.

3. Modular system (1) for manufacturing a three-dimensional object (2) by applying and selectively solidifying a pulverulent building material (13) layer by layer, comprising
a first module (30, 34-36) for carrying out a first process serving for manufacturing the three-dimensional object (2), and
at least a second and a third module (30, 34-36), each for carrying out a further process serving for manufacturing the three-dimensional object (2),
wherein the first to third modules (30, 34-36) are configured so that the second or the third module, or both, can selectively and replaceably be connected to the first module in a way that their housings are coupled to one another directly,
the second and the third module each comprises a manufacturing station (30) for applying and selectively solidifying the pulverulent building material (13) layer by layer on a building platform (8, 9) and/or in a replaceable container
a module interface (33) between the first module (34-36) and the second or third module (30) comprises an opening through which the production platform (8, 9) and/or the replaceable container (5) can be passed, and
the first to third modules (30, 34-36) comprise an internal conveyor device, which is configured in a way that it can transport the building platform (8, 9) and/or the replaceable container (5) between the first module (30) and the second or third module (30).

4. Modular system (1) according to claim 3, wherein the first module comprises:
a setup station (35) for preparing a building platform (8, 9) or a replaceable container (5), and/or
an exchanging station (36) for exchanging building platforms (8, 9) or replaceable containers (35) and/or
an unpacking station (34) for removing powder (11) that has remained unsolidified from the completed object (2) and/or
a station for finishing the unpacked object.

5. Modular system (1) according to one of claims 1 to 4, wherein
the interface (33) between two adjacent modules (30, 34-36) contains a barrier with which the gas compartments of the two adjacent modules (30, 34-36) can be separated from one another.

6. Modular system (1) according to claim 5, wherein
the interface (33) between two adjacent modules (30, 34-36) contains two barriers with which the gas compartments of the two adjacent modules (30, 34-36) remain sealed even when the modules (30, 34-36) are separated from one another.

7. Modular system (1) according to one of claims 1 to 6, further comprising an alignment element for aligning two adjacent modules (30, 34-36) with respect to one another.

8. Modular system (1) according to one of claims 1 to 7, wherein in addition to the second and third modules (34-36), further modules (34-36) are provided which can selectively be coupled in a flexible way instead of the second or third module, or in addition thereto, selectively to any other module of the system.

## Revendications

1. Système modulaire (1) pour la production d'un objet tridimensionnel (2) par application en couches et solidification sélective d'un matériau de construction pulvérulent (13), comprenant
un premier module (30, 34-36) destiné à effectuer une première opération servant à produire l'objet tridimensionnel (2), et
au moins un deuxième et un troisième module (30, 34-36) chacun destinés à effectuer une opération supplémentaire servant à produire l'objet tridimensionnel (2),
dans lequel les premier à troisième modules (30, 34-36) sont conçus de manière à ce que le deuxième ou le troisième module, ou les deux, puisse/puissent être relié(s) au premier module de manière sélective et interchangeable de telle sorte que leurs boîtiers soient directement couplés l'un à l'autre,
le premier module comporte une station de fabrication (30) pour l'application en couches et la solidification sélective du matériau de construction pulvérulent (13) sur une plate-forme de construction (8, 9) et/ou dans un récipient interchangeable (5),
une interface de module (33) entre le premier module (30) et le deuxième et/ou le troisième module (34-36) et/ou une interface de module (33) entre les deuxième et troisième modules (34-36) comporte une ouverture à travers laquelle la plate-forme de construction (8, 9) et/ou le corps mobile (5) peut/peuvent être introduit(s), et
les premier à troisième modules (30, 34-36) comportent un moyen de transport interne conçu pour transporter la plate-forme de construction (8, 9) et/ou le récipient interchangeable (5) entre le premier module (30) et le deuxième ou le troisième module (34-36).

2. Système modulaire (1) selon la revendication 1, dans lequel le deuxième et/ou le troisième module comporte/comportent :
une station de chargement (35) pour la préparation d'une plate-forme de construction (8, 9) ou d'un récipient interchangeable (5), et/ou
une station de remplacement (36) pour le remplacement des plates-formes de construction (8, 9) ou des récipients interchangeables (35), et/ou
une station de déballage (34) pour l'enlèvement de la poudre en vrac non solidifiée (11) de l'objet fini (2) et/ou
une station pour le post-traitement de l'objet déballé.

3. Système modulaire (1) pour la production d'un objet tridimensionnel (2) par application en couches et solidification sélective d'un matériau de construction pulvérulent (13), comprenant
un premier module (30, 34-36) destiné à effectuer une première opération servant à produire l'objet tridimensionnel (2) et
au moins un deuxième et un troisième module (30, 34-36) chacun destinés à effectuer une opération supplémentaire servant à produire l'objet tridimensionnel (2),
dans lequel les premier à troisième modules (30, 34-36) sont conçus de manière à ce que le deuxième ou le troisième module, ou les deux, puisse/puissent être relié(s) au premier module de manière sélective et interchangeable de telle sorte que leurs boîtiers soient directement couplés l'un à l'autre,
les deuxième et troisième modules comportent chacun une station de fabrication (30) pour l'application en couches et la solidification sélective du matériau de construction pulvérulent (13) sur une plate-forme de construction (8, 9) et/ou dans un récipient interchangeable (5),
une interface de module (33) entre le premier module (34-36) et le deuxième ou le troisième module (30) comporte une ouverture à travers laquelle la plate-forme de construction (8, 9) et/ou le récipient interchangeable (5) peut/peuvent être introduit(s), et
les premier à troisième modules (30, 34-36) comportent un moyen de transport interne conçu pour transporter la plate-forme de construction (8, 9) et/ou le récipient interchangeable (5) entre le premier module (34-36) et le deuxième ou le troisième module (30).

4. Système modulaire (1) selon la revendication 3, dans lequel le premier module comporte :
une station de chargement (35) pour la préparation d'une plate-forme de construction (8, 9) ou d'un récipient interchangeable (5), et/ou
une station de remplacement (36) pour le remplacement de plates-formes de construction (8, 9) ou de récipients interchangeables (35), et/ou
une station de déballage (34) pour l'enlèvement de la poudre en vrac non solidifiée (11) de l'objet fini (2) et/ou
une station pour le post-traitement de l'objet déballé.

5. Système modulaire (1) selon l'une quelconque des revendications 1 à 4, dans lequel
l'interface de module (33) comporte, entre deux modules adjacents (30, 34-36), une cloison au moyen de laquelle les espaces de gaz des deux modules adjacents (30, 34-36) peuvent être séparés l'un de l'autre.

6. Système modulaire (1) selon la revendication 5, dans lequel l'interface de module (33) comporte, entre deux modules adjacents (30, 34-36), deux cloisons au moyen desquelles les espaces de gaz des modules adjacents restent étanches même si les modules (30, 34-36) sont séparés l'un de l'autre.

7. Système modulaire (1) selon l'une quelconque des revendications 1 à 6, comprenant en outre un élément d'orientation destiné à orienter l'un par rapport à l'autre deux modules adjacents (30, 34-36).

8. Système modulaire (1) conforme à l'une quelconque des revendications 1 à 7, dans lequel il est prévu en plus des deuxième et troisième modules (34-36) d'autres modules (34-36) qui peuvent être couplés de manière sélective et flexible à un module quelconque du système au lieu ou en plus des deuxième et troisième modules.
